# EUROPEAN PATENT APPLICATION

(11) **EP 3 496 247 A1**
(43) Date of publication of application: **12.06.2019**
(21) Application number: 17837089.6
(22) Date of filing: 04.08.2017
(51) Int. Cl.: H02K 21/22, H02K 1/14

(54) **STATOR CORE AND MOTOR**

(30) Priority: 05.08.2016 US 201662371342 P; 06.03.2017 JP 2017041574
(71) Applicant: Nidec Corporation, Kyoto-shi, Kyoto 601-8205 (JP)
(72) Inventor: UEDA,Tomoya, Kyoto-shi Kyoto 601-8205 (JP); MAKINO,Yusuke, Kyoto-shi Kyoto 601-8205 (JP)
(74) Representative: Zimmermann, Tankred Klaus
(86) International application number: PCT/JP2017/028373
(87) International publication number: WO 2018/025988

(57) **Abstract**

A stator core 220 includes an annular core back portion 221; and a plurality of teeth 222. The plurality of teeth 222 extend radially from the core back portion 221 to a rotor magnet having a plurality of magnets. A ratio of the number of slots, which is the number of the plurality of teeth 222, to the number of poles, which is the number of magnets of the rotor magnet, is 3:4. In the stator core 220, a slot open ratio which is a ratio of a slot open angle θ2 between two adjacent teeth 222 in a peripheral direction to an angle θ1 between center lines of the two teeth 222 is 0.5 or more. When, in the rotor magnet, a ratio of a peripheral angle of one magnet to an angle between center positions of two adjacent magnets in the peripheral direction is set as a magnet ratio, a ratio of the slot open ratio to the magnet ratio is 0.6 to 0.7.

## Description

### Technical Field

The present invention relates to a stator core, and a motor including the stator core.

### Background Art

Conventionally, a technique for reducing cogging torque has been proposed for a brushless motor. For example, in a brushless motor 1 disclosed in Japanese Unexamined Patent Application Publication No. 2014-230444, a protrusion portion 12 is provided at a center of a pole tooth portion 9 of each salient pole 8 of a stator core 6, and a pair of notch portions 13 is provided on both sides of the protrusion portion 12. Accordingly, the cogging torque of the brushless motor 1 is reduced.

PTL 1: Japanese Unexamined Patent Application Publication No. 2014-230444

### Summary of Invention

### Technical Problem

However, in an engine cooling fan or the like, a motor having a large number of poles and slots is used for increasing an output torque of the motor. Even in such a multi-pole and multi-slot motor, it is required to reduce a cogging torque while suppressing reduction in the output torque of the motor.

The present invention is made to reduce a cogging torque with consideration of the challenges stated above. Solution to Problem

An exemplified stator core according to one embodiment of the present invention includes an annular core back portion; and a plurality of teeth extending radially from the core back portion to a rotor magnet having a plurality of magnets. A ratio of the number of slots which is the number of the plurality of teeth to the number of poles which is the number of the plurality of magnets of the rotor magnet is 3:4. A slot open ratio which is a ratio of a slot open angle between two adjacent teeth in a peripheral direction to an angle between center lines of the two teeth is 0.5 or more. When, in the rotor magnet, a ratio of a peripheral angle of one magnet to an angle between center positions of two adjacent magnets in the peripheral direction is set as a magnet ratio, a ratio of the slot open ratio to the magnet ratio is 0.6 to 0.7.

### Advantageous Effects of Invention

According to the present invention, it is possible to reduce a cogging torque.

### Brief Description of Drawings

[Fig. 1] Fig. 1 is a perspective view of a motor according to one embodiment.
[Fig. 2] Fig. 2 is a perspective view of the motor.
[Fig. 3] Fig. 3 is a longitudinal cross-sectional view of the motor.
[Fig. 4] Fig. 4 is a plan view of a stator core.
[Fig. 5] Fig. 5 is a longitudinal cross-sectional view of a shaft and a rotor.
[Fig. 6] Fig. 6 is a diagram illustrating an arrangement of a plurality of magnets.
[Fig. 7] Fig. 7 is a longitudinal cross-sectional view of an axial flow fan.
[Fig. 8] Fig. 8 is a diagram illustrating a slot open ratio and a magnet width ratio at which a cogging torque is minimized.
[Fig. 9] Fig. 9 is a diagram illustrating a slot open ratio and a magnet width ratio at which a cogging torque is minimized.
[Fig. 10] Fig. 10 is a diagram illustrating a slot open ratio and a magnet width ratio at which a cogging torque is minimized.

### Description of Embodiments

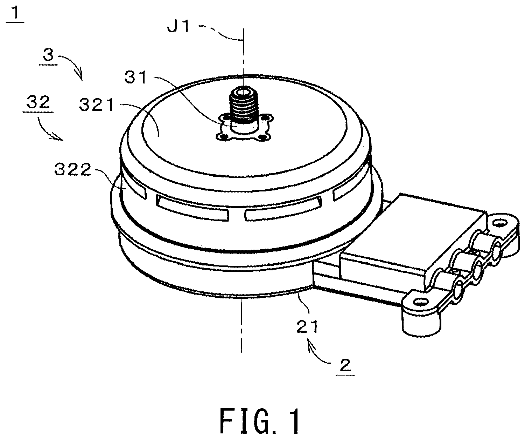

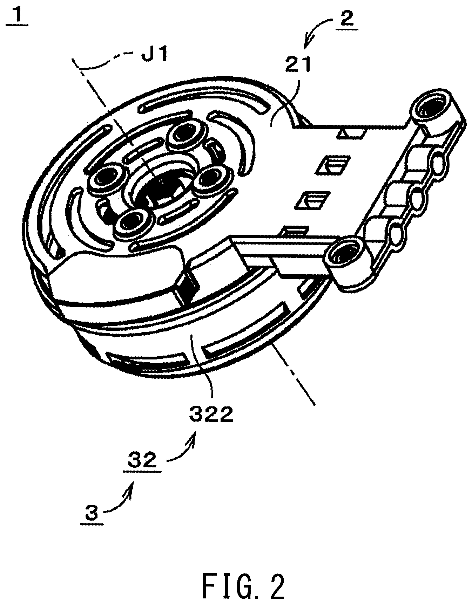

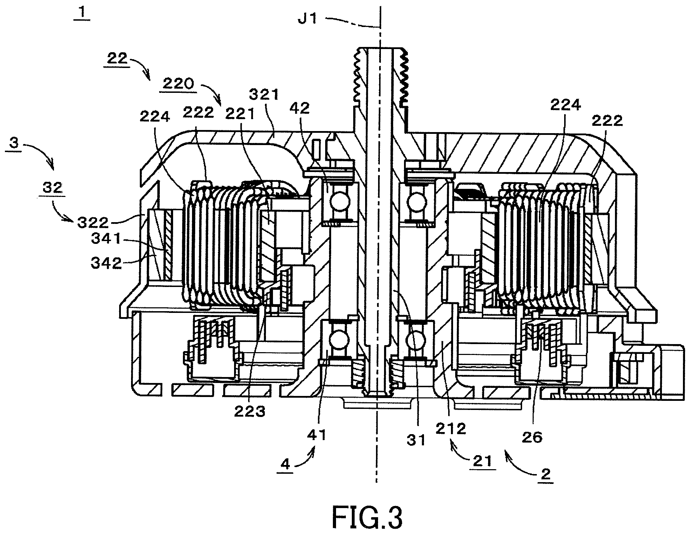

Fig. 1 is a perspective view showing an appearance of a motor 1 according to one exemplary embodiment of the present invention. The motor 1 is an external rotor brushless motor. The motor 1 is used to, for example, rotate an impeller in an axial flow fan. Fig. 2 is a perspective view of the motor 1 as viewed from a direction different from that of Fig. 1. Fig. 3 is a longitudinal cross-sectional view of the motor 1. Parallel slanting lines in the detailed cross-section are omitted in Fig. 3. Moreover, a configuration on a far side from the cross-section and a partial outer surface of the motor are also drawn in Fig. 3.

In this specification, an upper side and a lower side in a direction of a center axis J1 of the motor 1 in Fig. 3 are simply referred to as an "upper side" and a "lower side", respectively. The upper and lower sides in this specification do not indicate upper and lower sides in a gravity direction when installed into the actual equipment. Hereinafter, a peripheral direction around the center axis J1 is simply referred to as a "peripheral direction", and a radial direction around the center axis J1 is simply referred to as a "radial direction." Moreover, a direction parallel to the center axis J1 is referred to as a "vertical direction" or an "axial direction."

The motor 1 includes a stationary portion 2, a rotating portion 3, and a bearing mechanism 4. The bearing mechanism 4 rotatably supports the rotating portion 3 with respect to the stationary portion 2. The stationary portion 2 includes a bracket 21, an armature 22, and a bus bar unit 26. The rotating portion 3 includes a shaft 31 and a rotor 32. The bearing mechanism 4 includes a lower ball bearing 41 and an upper ball bearing 42.

The bracket 21 includes the cylindrical portion 212. The cylindrical portion 212 is a substantially cylindrical portion centered on the center axis J1 oriented in the vertical direction. The bearing mechanism 4 is fixed to an inner peripheral surface of the cylindrical portion 212 of the bracket 21. In particular, the lower ball bearing 41 of the bearing mechanism 4 is fixed to an inner peripheral surface of a lower portion of the cylindrical portion 212. Moreover, the upper ball bearing 42 is fixed to an inner peripheral surface of an upper portion of the cylindrical portion 212.

The armature 22 is fixed to an outer peripheral surface of the cylindrical portion 212 of the bracket 21. The armature 22 is disposed radially outward of the bearing mechanism 4. The armature 22 is electrically connected to the bus bar unit 26. The armature 22 is electrically connected to an external power supply (not shown) via the bus bar unit 26.

The armature 22 includes a stator core 220, an insulator 223, and a plurality of coils 224. The stator core 220 includes a core back portion 221 and a plurality of teeth 222. The insulator 223 is an insulator covering surfaces of the plurality of teeth 222. The plurality of coils 224 are formed by winding a conductive wire from above the insulator 223 to the plurality of teeth 222. In this embodiment, the plurality of coil 224 are three-phase coils.

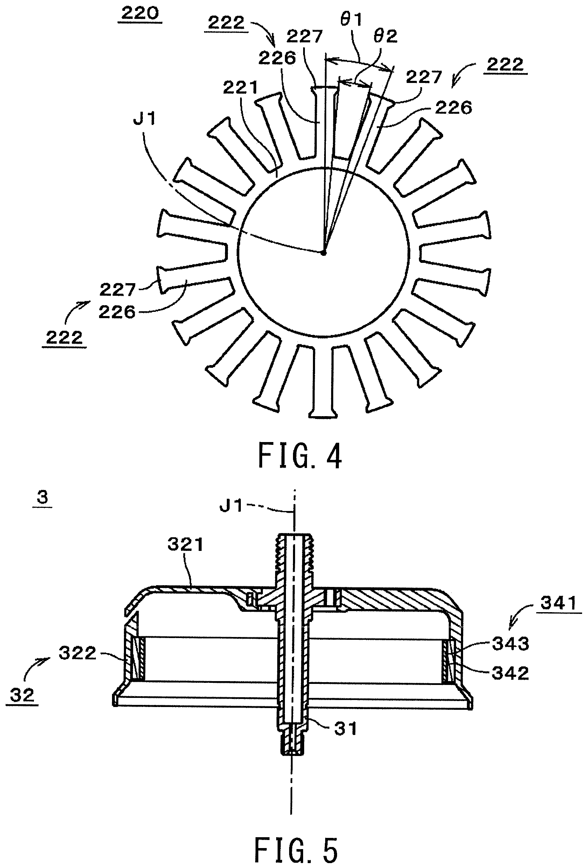

Fig. 4 is a plan view of the stator core 220. The core back portion 221 is an annular portion centered on the center axis J1. The core back portion 221 is fixed to the outer peripheral surface of the cylindrical portion 212 of the bracket 21. The plurality of teeth 222 eradiate radially outward from the core back portion 221. The plurality of teeth 222 are arranged at substantially equal angular intervals in the peripheral direction. Each tooth 222 includes a tooth body portion 226 and a tooth tip portion 227. The tooth body portion 226 extends substantially linearly and radially outward from the core back portion 221. The tooth tip portion 227 extends to both peripheral sides from a radial outer end portion of the tooth body portion 226. The core back portion 221 and the plurality of teeth 222 are, for example, a single member made of metal.

In the example illustrated in Fig. 4, the number of slots, which is the number of the plurality of teeth 222, is 18. An angle θ1 in the peripheral direction between center lines of two adjacent teeth 222 in the peripheral direction is 20 degrees. The center line of the tooth 222 is a straight line passing through the center axis J1 and a center in the peripheral direction of the tooth 222 in a plan view. Hereinafter, the angle θ1 is referred to as an "inter-teeth angle θ1." Furthermore, the angle θ2 in the peripheral direction of a slot open between the two adjacent teeth 222 in the peripheral direction is simply referred to as a "slot open angle θ2." The slot open is a space between tip portions of the two adjacent teeth 222 in the peripheral direction. In the example illustrated in Fig. 4, the slot open angle θ2 is an angle between a straight line passing through the center axis J1 and contacting a peripheral end portion of the tooth tip portion 227 of one tooth 222, and a straight line passing through the center axis J1 and contacting a peripheral end portion of the tooth tip portion 227 of the other tooth 222, in a plan view.

Hereinafter, a ratio of the slot open angle θ2 to the inter-teeth angle θ1 is referred to as a "slot open ratio." In the stator core 220 of the motor 1, the slot open ratio is 0.5 or more.

The shaft 31 exemplified in Fig. 3 is a substantially columnar or cylindrical member, which is centered on the center axis J1. The shaft 31 is made of, for example, metal. The shaft 31 is formed by, for example, an aluminum alloy. As shown in Fig. 3, the shaft 31 is rotatably supported together with the rotor 32 by the bearing mechanism 4. In particular, the lower ball bearing 41 of the bearing mechanism 4 supports a lower portion of the shaft 31. The upper ball bearing 42 is disposed higher than the lower ball bearing 41 and supports the shaft 31. The impeller of the axial flow fan, for example, is attached to an upper end portion of the shaft 31.

Fig. 5 shows longitudinal cross-sectional views of the shaft 31 and the rotor 32. The rotor 32 is connected to the shaft 31. The rotor 32 is a substantially cylindrical covered member centered on the center axis J1. The rotor 32 opens downward. The rotor 32 includes a rotor lid portion 321, a rotor side wall portion 322, a rotor magnet 341, and a rotor yoke 342.

The rotor lid portion 321 is connected to the shaft 31. The rotor lid portion 321 is a substantially disk-like portion centered on the center axis J1. The rotor side wall portion 322 extends downward from an outer edge portion of the rotor lid portion 321. The rotor side wall portion 322 is a substantially cylindrical portion centered on the center axis J1. In the example illustrated in Fig. 5, the rotor lid portion 321 and the rotor side wall portion 322 are a single member made of resin. Moreover, the rotor lid portion 321 and the rotor side wall portion 322 are integrally formed with the shaft 31 by the insert molding.

The rotor magnet 341 is fixed to an inner peripheral surface of the rotor side wall portion 322. The rotor magnet 341 includes a plurality of magnets 343 arranged in the peripheral direction. The rotor magnet 341 is radially opposed to the armature 22 radially outward of the armature 22. In the example illustrated in Fig. 5, the rotor yoke 342 is disposed between a magnet 343 of the rotor magnet 341 and the rotor side wall portion 322. In other words, the rotor magnet 341 is indirectly fixed to the inner peripheral surface of the rotor side wall portion 322 via the rotor yoke 342. The rotor yoke 342 is made of metal. Alternatively, the rotor yoke 342 may be excluded and the rotor magnet 341 may be directly fixed to the inner peripheral surface of the rotor side wall portion 322, in the motor 1.

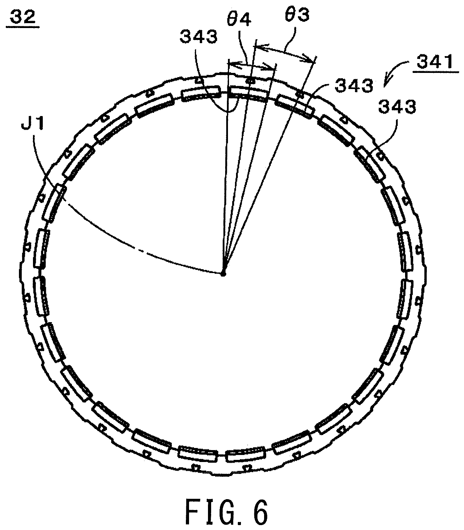

Fig. 6 is a diagram illustrating an arrangement of a plurality of magnets 343 of the rotor magnet 341. The rotor magnet 341 includes the plurality of magnets 343. The plurality of magnets 343 are disposed at substantially equal angular intervals in the peripheral direction around the center axis J1. In the example illustrated in Fig. 6, the number of poles, which is the number of the plurality of magnets 343, is 24. Therefore, a ratio of the number of slots to the number of poles is 3:4. In the rotor magnet 341, an angle θ3 in the peripheral direction between center positions of two adjacent magnets 343 in the peripheral direction is 15 degrees. The center position of the magnet 343 is a position of a center of the magnet 343 in the peripheral direction in a plan view. Hereinafter, the angle θ3 is referred to as an "inter-magnet angle θ3." Moreover, an angle θ4 of one magnet 343 in the peripheral direction is referred to as a "magnet angle θ4." The magnet angle θ4 is an angle between a straight line passing through the center axis J1 and contacting one peripheral end portion of the magnet 343, and a straight line passing through the center axis J1 and contacting the other peripheral end portion of the magnet 343, in a plan view.

Hereinafter, a ratio of the inter-magnet angle θ3 and the magnet angle θ4 is referred to as a "magnet width ratio." In the magnet 341 of the motor 1, a ratio of the slot open ratio to the magnet width ratio is 0.6 to 0.7. In the motor 1, it is preferable the magnet width ratio is 0.75 to 0.90.

In the motor 1, a current is supplied to the coil 224 via the bus bar unit 26, whereby a torque is generated between the coil 224 and the rotor magnet 341. Therefore, the rotating portion 3 (that is, the shaft 31 and the rotor 32) rotates around the center axis J1. The rotating portion 3 is rotatable in both a clockwise direction and a counterclockwise direction in a plan view.

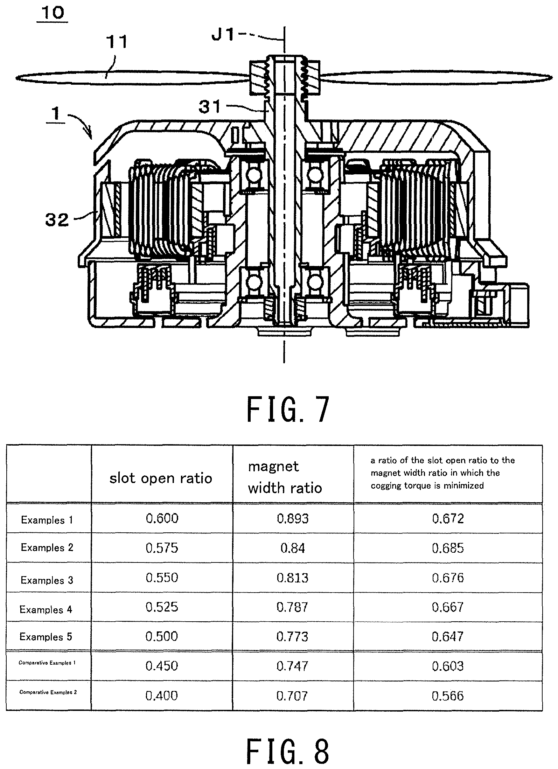

Fig. 7 is a cross-sectional view illustrating the axial flow fan 10 using the motor 1 described above. The axial flow fan 10 includes the motor 1 and an impeller 11. The impeller 11 is attached to an upper end portion of the shaft 31 above the rotor 32. The impeller 11, for example, sends wind downward from an upper side of the rotor 32.

Fig. 8 is a diagram illustrating, when the slot open ratio of the stator core 220 and the magnet width ratio of the rotor magnet 341 are variously tailored, the magnet width ratio in which a cogging torque is minimized for the respective slot open ratio, which is obtained by the simulation with the motor 1 having 18 slots and 24 poles. Additionally, Fig. 8 also illustrates a ratio of the slot open ratio to the magnet width ratio in which the cogging torque is minimized.

Examples 1 to 5 illustrated in Fig. 8 show results of the simulations in a case where the slot open ratio is 0.6, 0.575, 0.55, 0.525 and 0.5, respectively. Comparative Examples 1 and 2 show results of the simulations in a case where the slot open ratio is 0.45 and 0.4, respectively.

In Comparative Examples 1 and 2, a size of a winding wound around the teeth 222 is limited since the slot open ratio is relatively small. Meanwhile, in Examples 1 to 5, the slot open is relatively large since the slot open ratio is 0.5 or more, thus the winding can be quite largely around the teeth 222. Consequently, it is possible to increase an output torque of the motor 1. Moreover, the ratio of the slot open ratio to the magnet width ratio is 0.6 to 0.7 as shown in Fig. 8, thus another advantageous effect of decreasing the cogging torque can also be obtained. In Examples 1 to 5, the magnet width ratio is 0.75 to 0.90.

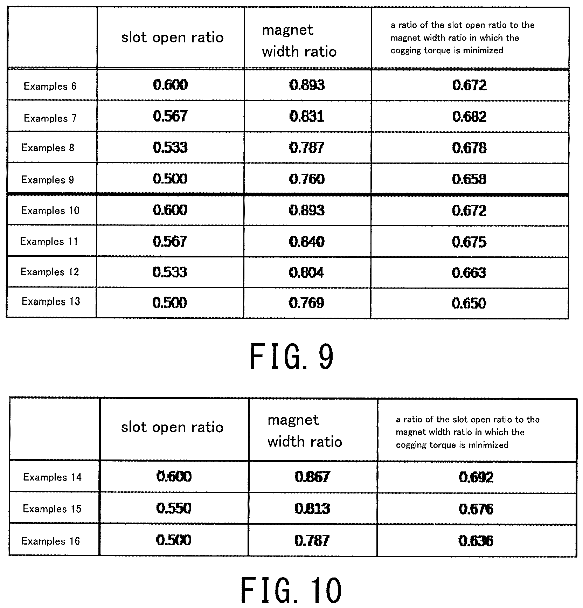

The motor 1 may have different numbers of slots and poles as long as the ratio of the number of slot to the number of poles is 3:4. Fig. 9 is a diagram illustrating, when the slot open ratio of the stator core 220 and the magnet width ratio of the rotor magnet 341 are variously tailored, the magnet width ratio in which a cogging torque is minimized for the respective slot open ratio, which is obtained by the simulation with the motor 1 having 12 or 24 slots. Additionally, Fig. 9 also illustrates a ratio of the slot open ratio to the magnet width ratio in which the cogging torque is minimized.

Examples 6 to 9 illustrated in Fig. 9 show results of the simulations in a case where the number of slots is 12 while the slot open ratio is 0.6, 0.567, 0.533, and 0.5, respectively. Examples 10 to 13 show results of the simulations in a case where the number of slots is 24 while the slot open ratio is 0.6, 0.567, 0.533, and 0.5, respectively.

In Examples 6 to 13, the slot open ratio is 0.5 or more, and the ratio of the slot open ratio to the magnet width ratio is 0.6 to 0.7, as in Examples 1 to 5. Therefore, the output torque of the motor 1 can be increased while decreasing the cogging torque. Moreover, in Examples 6 to 13, the magnet width ratio is 0.75 to 0.90.

As described above, the stator core 220 includes the annular core back portion 221 and the plurality of teeth 222. The plurality of teeth 222 extend radially from the core back portion 221 to the rotor magnet 341 having the plurality of magnets 343. The ratio of the number of slots to the number of poles is 3:4. The number of slots is the number of the plurality of teeth 222, and the number of poles is the number of magnets 343 of the rotor magnet 341. In the stator core 220, the slot open ratio is a ratio of the slot open angle θ2 between the two adjacent teeth 222 in the peripheral direction to the angle θ1 between center lines of the two teeth 222, which is 0.5 or more. Moreover, in the rotor magnet 341, when the ratio of the peripheral angle θ4 of one magnet 343 to the angle θ3 between center positions of two adjacent magnets 243 in the peripheral direction is set as the magnet ratio, the ratio of the slot open ratio to the magnet ratio is 0.6 to 0.7. Therefore, as described above, the output torque of the motor 1 can be increased while decreasing the cogging torque.

In the stator core 220, the magnet width ratio is 0.75 to the 0.90. Consequently, the cogging torque can be further decreased.

The motor 1 includes the armature 22 including the stator core 220, the rotor 32 including the rotor magnet 341, and the bearing mechanism 4 rotatably supporting the rotor 32. The rotor magnet 341 is disposed radially outward of the plurality of teeth 222 of the armature 22. The number of slots in the motor 1 is, for example, 12, 18 or 24. Therefore, it is possible to provide the external rotor motor 1 with the increased output torque and the reduced cogging torque.

In the example as described above, the motor 1 is an external rotor motor, but the simulation was also carried out for an internal rotor motor. Examples 14 to 16 illustrated in Fig. 10 show results of the simulations for the internal rotor motor in a case where the number of slots is 18 while the slot open ratio is 0.6, 0.55, and 0.5, respectively. Additionally, Fig. 10 also illustrates a ratio of the slot open ratio to the magnet width ratio in which the cogging torque is minimized.

In the internal rotor motor, the ratio of the number of slots to the number of poles is 3:4, the slot open ratio is 0.5 or more, and the ratio of the slot open ratio to the magnet width ratio is 0.6 to 0.7, similar to other examples. Therefore, the output torque of the motor can be increased while decreasing the cogging torque. Moreover, the magnet width ratio is 0.75 to 0.90, thus the cogging torque can be further decreased.

The internal rotor motor includes an armature including a stator core, a rotor including a rotor magnet, and a bearing mechanism rotatably supporting the rotor. The rotor magnet is disposed radially inward of a plurality of teeth of the armature. The number of slots in the internal rotor motor is, for example, 18. Therefore, it is possible to provide the internal rotor motor with the increased output torque and the reduced cogging torque.

The stator core 220, the external rotor motor 1 and the internal rotor motor can be modified in various ways.

In the stator core 220, the magnet width ratio may be less than 0.75, or alternatively may exceed 0.90. Furthermore, in the stator core 220, the number of slots is not limited to 12, 18 or 24. The numbers of slots and poles may be appropriately altered.

The shape and structure of the external rotor motor 1 can be appropriately altered from the examples described above, and it is the same for the internal rotor motor.

The configurations in the embodiment stated above and the modifications may be appropriately combined as long as they do not conflict to each other.

### Industrial Applicability

The stator core according to the present invention can be used for a motor with various structures and for various purposes. Furthermore, the motor according to the prevent invention can be used as a motor for various purposes. Reference Signs List

- 1: motor
- 4: bearing mechanism
- 22: armature
- 32: rotor
- 220: stator core
- 221: core back portion
- 222: teeth
- 341: rotor magnet
- 343: magnet
- J1: center axis
- θ1: inter-teeth angle
- θ2: slot open angle
- θ3: inter-magnet angle
- θ4: magnet angle

## Claims

1. A stator core comprising:
an annular core back portion; and
a plurality of teeth extending radially from the core back portion to a rotor magnet having a plurality of magnets,
wherein a ratio of the number of slots which is the number of the plurality of teeth to the number of poles which is the number of the plurality of magnets of the rotor magnet is 3:4,
a slot open ratio which is a ratio of a slot open angle between two adjacent teeth in a peripheral direction to an angle between center lines of the two teeth is 0.5 or more, and
when, in the rotor magnet, a ratio of a peripheral angle of one magnet to an angle between center positions of two adjacent magnets in the peripheral direction is set as a magnet ratio, a ratio of the slot open ratio to the magnet ratio is 0.6 to 0.7.

2. The stator core according to Claim 1,
wherein the magnet width ratio is 0.75 to 0.90.

3. A motor comprising:
an armature having the stator core according to Claim 1 or 2;
a rotor having the rotor magnet; and
a bearing mechanism rotatably supporting the rotor,
wherein the rotor magnet is disposed radially outward of the plurality of teeth, and
the number of slots is 12, 18 or 24.

4. A motor comprising:
an armature having the stator core according to Claim 1 or 2;
a rotor having the rotor magnet; and
a bearing mechanism rotatably supporting the rotor,
wherein the rotor magnet is disposed radially inward of the plurality of teeth, and
the number of slots is 18.
